# EUROPEAN PATENT APPLICATION

(11) **EP 2 534 946 A1**
(43) Date of publication of application: **19.12.2012**
(21) Application number: 12003873.2
(22) Date of filing: 16.05.2012
(51) Int. Cl.: A01K 63/04, B01F 3/04, C02F 3/20

(54) **Method to reduce nitrogen concentration in salt water**

(30) Priority: 16.06.2011 EP 11004910
(71) Applicant: Linde Aktiengesellschaft, 80331 Munich (DE)
(72) Inventor: Glomset, Kenneth, 6020 Alesund (NO); Schneeberger, Heribert, 93309 Kelheim (DE)

(57) **Abstract**

The invention relates to a method for reducing the nitrogen content in salt water having a salinity between 0,5% per weight and 3,5 % per weight, wherein oxygen or an oxygen- containing gas (5, 21) is introduced into a fluid stream (4) to obtain a fluid stream (10) comprising oxygen containing bubbles and wherein said fluid stream (10) comprising said oxygen containing bubbles is introduced into said salt water. Said fluid stream (10) comprising said oxygen containing bubbles is kept at a height below the level (16) of said salt water until it is introduced into said salt water.

## Description

### Method to reduce nitrogen concentration in water

The invention relates to a method for reducing the nitrogen content in salt water having a salinity between 0,5% per weight and 3,5 % per weight, wherein oxygen or an oxygen-containing gas is introduced into a fluid stream to obtain a fluid stream comprising oxygen containing bubbles and wherein said fluid stream comprising said oxygen containing bubbles is introduced into said salt water.

As a consequence of increasing demand for fish and fish products and simultaneously reduced fishing quota aquaculture business is growing steadily. In most of the intensive aquaculture plants fish is grown in tanks filled with water. The salinity of water thereby depends on fish species and fish size. Salmon smolts for example are raised in freshwater before they gradually get adapted to higher water salinities. Traditionally, salmon is then grown to market size in sea cages floating in the open sea.

In order to overcome manifold problems related to fish health and environment that occur when fish is grown in sea cages, on-growing of salmon and even growing of full-size salmon can be realised in land based fish farms, where salmon is kept in tanks of different size.

Also marine fish species like cod, sea bream, sea bass or yellowtail kingfish can be grown in land based fish farms. Water salinity can vary from 0.5% (brackish water) to about 3.5% (full salinity sea water) in these intensive production units.

A continuous water exchange is required to supply the fish with oxygen enriched water and to discharge harmful metabolic products like ammonia and carbon dioxide. Thus, fish tanks are provided with a water inlet and a water outlet. The water outlet can be connected to a mechanical and/or biological filter unit, where these harmful components are removed to a high extent, thus allowing the re-use of water in fish production. These so-called recirculation plants normally use intensive aeration in their biological step as well as for stripping of carbon dioxide.

Intensive aeration, however, may lead to an over-saturation of inert gases contained in air like nitrogen. Nitrogen over-saturation in the inlet water is known to be a problem for fish production: While moderate levels of over-saturation (up to some 103%) will reduce fish growth, higher levels (than 105%) may cause the so-called gas bubble disease, leading to increased fish mortality rates. Even in flow-through plants taking all the water directly from the sea, nitrogen over-saturation has been observed.

It is object of the present invention to provide a method to reduce nitrogen concentration in water and especially to avoid nitrogen over-saturation in fish-tanks.

This object is achieved by a method for reducing the nitrogen content in salt water having a salinity between 0,5% per weight and 3,5 % per weight, wherein oxygen or an oxygen-containing gas is introduced into a fluid stream to obtain a fluid stream comprising oxygen containing bubbles and wherein said fluid stream comprising said oxygen containing bubbles is introduced into said salt water, and which is characterized in that said fluid stream comprising said oxygen containing bubbles is kept at a height below the level of said salt water until it is introduced into said salt water.

The invention relates to a method for generating and distributing oxygen containing micro bubbles in salt water which is stored in a tank. The term "tank" shall include any type of tank, basin or reservoir for holding a liquid. The term "tank" shall especially comprise artificial reservoirs, such as artificial lakes or ponds, as well as manufactured reservoirs, such as basins or containers and in particular tanks or reservoirs used in aquaculture and for growing fish, especially in land based fish farms.

It has been found that the nitrogen content of the water can be reduced by providing small micro-bubbles of oxygen. In contact with the water such micro-bubbles release most of their oxygen while they simultaneously take up nitrogen and other inert gases present in the water. This gas exchange process is supported by small bubble diameters (which means high specific surface of the bubbles) as well as by elevated system pressure (partial pressure). Furthermore, the creation of micro bubbles is improved in salt water.

Preferably, the diameter of the micro bubbles is less than 200 micrometer, preferably between 50 micrometer and 100 micrometer. It has been found that these small bubbles are more evenly distributed in the salt water tank and thus oxygen dissolved from the bubbles into the salt water is also more evenly distributed in the tank. Furthermore, small bubbles rise up to the surface of the salt water less fast than larger bubbles. That means small bubbles as generated by the invention have an increased lifetime, maintain in the salt water for a longer time and allow to capture more nitrogen from the water and to dissolve more oxygen into the water. Finally, small bubbles have a larger specific surface than large bubbles, i.e. the total surface area per bubble mass or per bubble volume is larger. Thus, the contact area with the salt water is enlarged and more nitrogen is stripped out or absorbed by the bubbles.

On the one hand, the invention is based on the fact that the generation of micro-bubbles is improved at higher water salinity. Moreover, coalescence of micro-bubbles to larger bubbles is prevented at higher water salinity. Therefore, the invention is used to reduce the nitrogen concentration in salt water having a salt concentration between 0,5 % per weight and 3,5 % per weight, preferably between 0,7 % per weight and 3,5 % per weight or between 0,7 % per weight and 2,0 % per weight.

As mentioned above, the gas exchange process is improved by slightly elevated pressure. It is important to keep the pressure in the water flowing in the fluid feed line between the dissolving unit which introduces the oxygen or oxygen-containing gas into the fluid stream and the salt water at elevated pressure level in order to keep the bubble size small. The fluid stream is kept in a position as low as possible in order to make use of the static pressure of the salt water level. As a consequence, the most advantageous design includes a fluid feed line for the fluid stream entering the tank with the salt water through the bottom of the tank.

According to the invention an oxygen-containing gas, preferably pure oxygen, is introduced into a fluid stream, especially in a water stream, which shall then be introduced into a tank with salt water. The introduction of the gas into the fluid stream is carried out either inline or in a bypass line as described in more detail below. The oxygen enriched fluid stream, i.e. the fluid stream comprising the oxygen containing bubbles, is then fed to the tank with the salt water via a fluid feed line at a height below the level of the salt water in the tank, that is the level of the salt water is above the fluid feed line.

When the fluid feed line is arranged over the rim of the tank as in the prior art or, in general, when the fluid feed line raises to a height above the level of the water inside the tank, the pressure drops according to the reduced hydrostatic pressure and there is a considerable risk that the small micro bubbles become larger bubbles and that oxygen which had already been dissolved is degassed. Therefore, the invention proposes that after the oxygen containing gas has been introduced into the fluid stream, the fluid stream comprising said oxygen containing bubbles is kept at a height below the level of the salt water until it is introduced into the salt water. Thereby, the salt water inside the tank always imposes hydrostatic pressure on the fluid stream in the fluid feed line and prevents or at least minimizes increase of the bubble diameter and / or coascelence of small bubbles to large bubbles.

Part of the oxygen present in the micro-bubbles is dissolved in the fluid stream and, after entering the tank, part of the oxygen is dissolved in the salt water. Furthermore, inert gases like nitrogen are gathered from the fluid stream and from the salt water in the tank. In the tank the micro-bubbles slowly rise to the salt water surface where they release the residual gases (containing up to 80% nitrogen) to the atmosphere.

The invention is useful for distributing pure oxygen in salt water, and it is in particular useful for oxygenating fish tanks. Such fish tanks may have a height between 0,3 meter and 6 meter and a diameter between 2 meter and 30 meter.

The invention is preferably being carried out by means of a system comprising a dissolving unit for introducing an oxygen containing gas in the fluid stream and a distribution unit for distributing the fluid stream with the micro bubbles in the salt water inside the tank. The dissolving unit is located outside the tank, the distribution unit is located inside the tank. A fluid feed line connects the dissolving unit with the distribution unit. The fluid feed line enters the tank through a side wall of the tank or through the bottom of the tank. Thus, the fluid feed line enters the tank at a height below the salt water level in the tank.

The term "dissolving unit" shall not mean that the oxygen will be completely dissolved in the fluid stream but refers to a unit for introduction of oxygen or an oxygen containing gas into water or a fluid stream. The main purpose of the dissolving unit is to introduce the oxygen or oxygen containing gas into the fluid stream in such a manner that small oxygen-containing bubbles with, for example, a diameter between 50 micrometer and 200 micrometer, are created.

In one embodiment the dissolving unit is provided inline with the fluid feed line. All the fluid is transported through the fluid feed line to the dissolving unit. In the dissolving unit oxygen or an oxygen containing gas is introduced into the fluid creating micro bubbles with oxygen inside. The fluid with the oxygen bubbles is then transported to the tank with the salt water. Thus, the fluid feed line comprises an upstream portion upstream the dissolving unit and a downstream portion connecting the dissolving unit with the tank. The dissolving unit is provided inline between the upstream and the downstream portion of the fluid feed line.

In another embodiment a bypass line is provided which branches off from the fluid feed line and recombines with the fluid feed line at a downstream location. In this case, the dissolving unit is preferably arranged in the bypass line. The fluid is fed through the fluid feed line to the branch-off of the bypass line. Part of the fluid continues to flow through the fluid feed line and part of the fluid is transported through the bypass line. The fluid flow to and through the bypass line is preferably obtained or at least assisted by means of a pump provided in the bypass line. The oxygen containing gas or pure oxygen is then introduced into that portion of the fluid flowing through the bypass line to get a fluid oversaturated with oxygen. Finally, the fluid oversaturated with oxygen is re-introduced into the fluid feed line.

The dissolving unit arranged in the bypass line can be located above ground to facilitate access to the dissolving unit. The pressure in the dissolving unit and in the bypass line downstream the dissolving unit is preferably set to such a level to avoid degassing and coascelence of the micro bubbles. The pressure increase could for example be achieved by means of a pump which sucks in fluid from the fluid feed line and pumps it to the dissolving unit. The increased pressure in the bypass line does not only prevent the degassing but also improves the distribution of the portion of the fluid flowing through the bypass line in the portion of the fluid flowing through the fluid feed line when both fluid portions are re-combined.

The degree of oversaturation of oxygen in the fluid flowing through the bypass line is determined based on the ratio of the fluid flowing through the bypass line to the fluid flowing through the fluid feed line and on the desired degree of saturation. For example: Water shall be 200 % oversaturated with oxygen before being distributed in a fish tank. In that case a main water stream is passed through a fluid feed line. For example 20 % of the water flow is directed through the bypass, 80% of the water flow continues to flow through the fluid feed line. The water flow in the bypass line is fed to a dissolving unit where oxygen is injected into and dissolved in the water to obtain a water flow oversaturated in oxygen by 1000%. That oversaturated water flow is then returned to and combined with the main water stream to get the desired 200% saturated water flow which is fed to the tank.

The dissolving unit comprises a fluid inlet and a fluid outlet for the fluid stream which is to be loaded with oxygen. The gas is introduced into the dissolving unit via a gas inlet. The gas is mixed with the fluid stream passing through the dissolving unit. The creation of micro bubbles depends on the pressure present in the dissolving unit. Advantageously micro bubbles are created by means of a dissolving unit which works at an overpressure of less than 0,5 bar, preferably less than 0,3 bar. For example, the fluid stream into which said oxygen or oxygen-containing gas is introduced has a positive pressure of 0,1 bar to 0,5 bar above ambient pressure. It has been found that at higher pressures there is a tendency to larger bubbles which show a reduced lifetime in the tank and a lower nitrogen absorption rate compared to the inventive small micro bubbles.

The dissolving unit comprises one or more injection points for introducing the oxygen containing gas or pure oxygen into the fluid stream and can be of any known type, especially of Venturi type or pressure tanks or cones. A preferred dissolving unit is described in European patent application EP 1 598 106 A2 the whole content of which is seen as part of the disclosure of this application.

It is further advantageous to provide a regulation valve in the fluid feed line downstream the dissolving unit in order to control and/or set the pressure in the fluid feed line and in the dissolving unit, before the over saturated water is transported via the pipeline to the distribution unit in the tank. The distribution pipeline from the regulation valve to the tank is then located below the water level in the tank to obtain the necessary hydrostatic pressure to prevent the over saturated water to degass and to prevent the micro bubbles to form larger bubbles before it enters the liquid through the distribution unit.

The distribution unit may be of any known design, including simple pipe nozzles or vertical and/or horizontal diffuser tubes and slot tubes. A preferred distribution unit is described in EP 2 008 513 A1 the content of which shall be included by reference.

The inventive system is especially advantageous for artificial or manufactured tanks or basins which are built above or in the ground. The tank could either be totally or partly lowered into the ground. The dissolving unit as well as part of the fluid feed line are preferably located below ground level and/or beneath the tank. The fluid feed line located in the ground preferably enters the tank from beneath through the bottom of the tank. The invention is preferably used when a new tank is set up.

According to one embodiment of the invention the water introduced into the fish tank shall be saturated with oxygen to a level of 250 %. For every 47% increase in saturation the fluid feed line needs to be 1 meter below the water level in the fish tank in order to keep the oxygen dissolved in the water during the transport from the dissolving unit to the fish tank. The water is originally to 100% saturated with oxygen. In the dissolving unit oxygen is added to the water to get a final saturation of 250%. That means, the saturation of the water is 150% above the normal saturation. The 150% increase in saturation requires that the water is kept at a level of 3,19 meter or more below the water level.

The invention has several advantages compared to the state of the art systems:
- Nitrogen concentration in the salt water in the tank is reduced. Nitrogen over-saturation of the salt water is avoided.
- If there is a leak in the pipe work or a regulation valve mounted above the liquid level in the tank, there is the risk that air will be sucked into the fluid stream flowing to the tank. Thus, the nitrogen concentration in the fluid stream will increase. When such a nitrogen over saturation occurs in the fluid feed line to a fish tank the increased nitrogen concentration might be harmful and even lethal to the fish in the tank. The inventive installation of the fluid feed line at a height below the water level in the tank eliminates the risk of sucking in air and of nitrogen over saturation.
- The risk of degassing is reduced when a fluid, such as water, with a high saturation level of a gas is transported into a tank.
- In particular for new tank installations the costs are reduced due to less piping, bends, connections and valves.
- Further, compared to the prior art a reduced the pressure in the fluid feed is required to maintain the same degree of gas saturation in the fluid stream. Thus, the running cotsts are reduced, for example when the water is fed to the tank by means of electric pumps.
- By placing the fluid feed line or at least parts of it and/or the dissolving unit into the ground the visible components and pipe work around the tank is reduced. This will give additional free space around the tank for other installations. Further, the need for steel constructions supporting these pipes is eliminated. When the pipe is mounted in the ground it has the support from the land masses, and does not need any construction to support it.
- By maintaining the microbubble size small due to the hydrostatic pressure it is also possible to reduce the needed energy for oxygen transfer to the water. As a consequence the cost of pumping water with high oxygen saturation can be reduced compared to existing /current design where the oxygenated water is entering the fish tanks above water level in the tanks.

The invention as well as further details of the invention shall now be described with reference to the enclosed drawing wherein
- figure 1: shows a fish tank with a distribution system according to the invention and
- figure 2: shows an alternative embodiment of the invention.

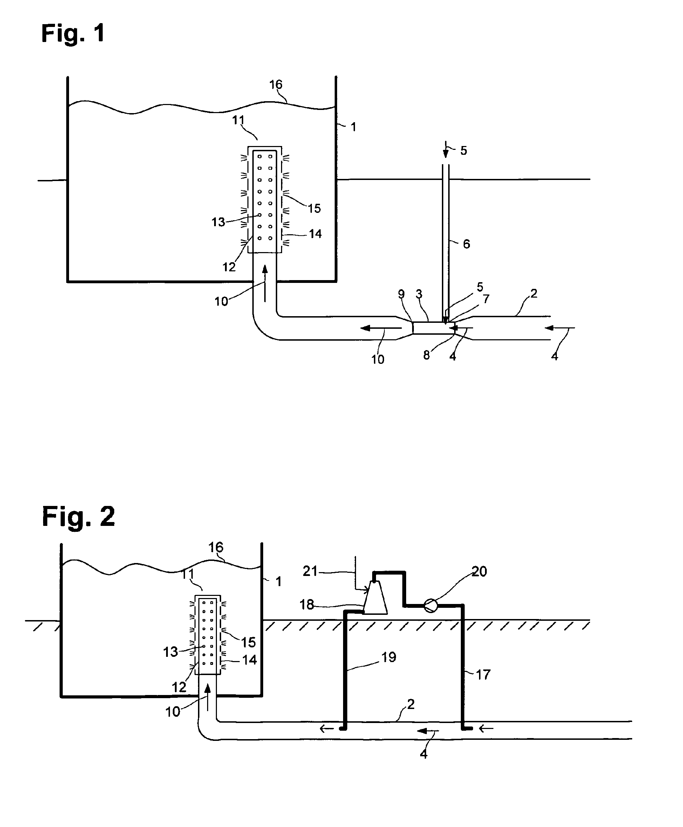

Figure 1 schematically shows a fish tank 1 which is used in aquaculture for growing fish. The fish tank 1 is provided with a preferred system for distributing oxygen in the fish tank water and for absorbing nitrogen from the water. The system comprises a fluid feed line 2 for supplying water to the tank 1. The fluid feed line 2 is provided with a dissolving unit 3 for introduction of oxygen 5 into the water flow 4. The oxygen 5 is fed through a gas feed line 6 to the dissolving unit 3. In the dissolving unit 3 the oxygen introduced through gas inlet 7 and the water introduced via fluid inlet 8 are mixed and the oxygen 5 is dissolved in the water flow 4. A water stream 10 saturated with small oxygen bubbles leaves dissolving unit 3 via fluid outlet 9.

The dissolving unit 3 as well as the portion of the fluid feed line 2 downstream of the dissolving unit 3 are laid in the ground. The fluid feed line 2 enters the tank 1 through the bottom of the tank 1.

Within the tank 1 the fluid feed line 2 ends in a distribution unit 11 for distributing the oxygen enriched water 10 in the tank 1.

The distribution unit 11 comprises an inner pipe 12 with openings 13 and an outer pipe 14 with openings 15. The oxygenated water 10 enters the inner pipe 12 and leaves it through a plurality of openings 13. The inner pipe 12 is surrounded by the outer pipe 14. The water leaving the inner pipe 12 is first distributed in the annular space between the inner pipe 12 and the outer pipe 14 and then distributed into the tank 1 via several openings 15.

The dissolving unit 3 and the fluid feed line 2 connecting the dissolving unit 3 with the tank 1 are installed underground. Downstream the dissolving unit 2 the fluid feed line 2 does not comprise any portions with descending slope. In particular, the dissolving unit 3, the fluid feed line 2 downstream the dissolving unit 3 and the distribution unit 11 are all located below the water level 16 in the tank 1. Thus, the oxygenated water stream comprising oxygen micro bubbles 10 is always subject to the hydrostatic pressure of a water column corresponding to the water height in the tank 1.

Figure 2 shows another embodiment of the invention. In both figures same reference numbers refer to same parts. Fish tank 1 is supplied with water via fluid feed line 2 which is installed underground. A bypass line 17 branches off from fluid feed line 2 and connects a dissolving unit 18 located on the ground with fluid feed line 2. A return line 19 connects dissolving unit 18 with fluid feed line 2 downstream of the branch of bypass line 17. Further, a pump 20 is provided in bypass line 17.

By means of the pump 20 a portion of the water flowing through fluid feed line 2 is sucked into bypass line 17 and passed to the dissolving unit 18. Via oxygen feed line 21 gaseous oxygen is also fed to the dissolving unit 18 and introduced into the water. The water enriched with oxygen is then returned to fluid feed line 2 via return line 19 and mixed into the water stream flowing in fluid feed line 2. The water stream enriched and/or saturated with oxygen is passed to fish tank 1 as described above with reference to figure 1.

## Claims

1. Method for reducing the nitrogen content in salt water having a salinity between 0,5% per weight and 3,5 % per weight, wherein oxygen or an oxygen- containing gas (5, 21) is introduced into a fluid stream (4) to obtain a fluid stream (10) comprising oxygen containing bubbles and wherein said fluid stream (10) comprising said oxygen containing bubbles is introduced into said salt water, **characterized in that** said fluid stream (10) comprising said oxygen containing bubbles is kept at a height below the level of said salt water until it is introduced into said salt water.

2. Method according to claim 1, **characterized in that** said fluid stream (10) comprising said oxygen containing bubbles is passed through a fluid feed line (2) into a tank (1) with said salt water and said fluid feed line (2) enters said tank (1) through a side wall of said tank (1) or through the bottom of said tank (1).

3. Method according to any of claims 1 or 2 **characterized in that** said oxygen or said oxygen containing gas (5, 21) is introduced into a water stream (4).

4. Method according to any of claims 1 to 3 **characterized in that** a portion (17) of said fluid stream (4) is split off the fluid stream, said oxygen or said oxygen containing gas (21) is dissolved into said portion (17) of said fluid stream and said portion (17) of said fluid stream comprising said oxygen containing bubbles is re-introduced into said fluid stream (4).

5. Method according to any of claims 1 to 4 **characterized in that** said fluid stream (10) comprising said oxygen containing bubbles is transported to said tank (1) with said liquid at a height of at least 2,0 m below the level of said liquid in said tank, preferably 3,0 m below the level of said liquid in said tank.

6. Method according to any of claims 1 to 5 **characterized in that** such an amount of oxygen (5, 21) is introduced into said fluid stream (4) to obtain an oversaturation of oxygen in said fluid stream (10) of at least 200 %.

7. Method according to any of claims 1 to 6 **characterized in that** said fluid stream (10) comprising said oxygen containing bubbles is passed through a fluid feed line (2) into a fish tank (1).

8. Method according to any of claims 1 to 7 **characterized in that** said fluid stream into which said oxygen or oxygen-containing gas is introduced has a positive pressure of 0,1 bar to 0,5 bar above ambient pressure.
